# EUROPÄISCHE PATENTANMELDUNG

(11) **EP 1 764 587 A2**
(43) Veröffentlichungstag der Anmeldung: **21.03.2007**
(21) Anmeldenummer: 06017599.9
(22) Anmeldetag: 24.08.2006
(51) Int. Cl.: G01F 1/58

(54) **Magnetisch-induktiver Durchflussmesser mit einer Erdungsscheibe**

(30) Priorität: 19.09.2005 DE 102005044677
(71) Anmelder: ABB PATENT GmbH, 68526 Ladenburg (DE)
(72) Erfinder: Bäcker, Ralf, Dipl.-Phys., 37120 Bovenden (DE); Keese, Dieter, 37194 Wahlsburg (DE); Rackebrandt, Karl-Heinz, 37139 Adelebsen (DE)
(74) Vertreter: Schmidt, Karl Michael

(57) **Zusammenfassung**

Magnetisch-induktiver Durchflussmesser mit einem Messrohr (1) aus Metall, das von einem eine elektrische Mindestleitfähigkeit aufweisenden Medium (4) durchflossen ist, welches von einem mittels Magnetanordnung (5) erzeugten Magnetfeld durchsetzt ist, in dessen Bereich mindestens zwei diametral am Messrohr (1) angeordnete Messelektroden (6) zur Erfassung der induktiv erzeugten Messspannung vorgesehen sind, wobei das metallische Messrohr (1) mit einer elektrisch isolierenden Innenschicht (7) versehen ist und stirnseitig eine elektrisch leitfähige Erdungsscheibe (8) zur Erdung des durch das Messrohr (1) fließenden Mediums angeordnet sind, die über das Messrohr (1) an Masse gelegt ist, wobei die Erdungsscheibe (8') aus einem elektrisch leitfähigen Kunststoff besteht, welche dichtend an die Stirnseite (2) des Messrohres (1) zur Anlage kommt, um durch den direkten Kontakt an Masse zu kommen.

## Beschreibung

Die Erfindung betrifft einen magnetisch-induktiven Durchflussmesser mit einem Messrohr aus Metall, das von einem eine elektrische Mindestleitfähigkeit aufweisenden Medium durchflossen ist, welches von einem mittels Magnetanordnung erzeugten Magnetfeld durchsetzt ist, in dessen Bereich mindestens zwei diametral am Messrohr angeordnete Messelektroden zur Erfassung der induktiv erzeugten Messspannung vorgesehen sind, wobei das metallische Messrohr mit einer elektrisch isolierenden Innenschicht versehen ist und stirnseitig eine elektrisch leitfähige Erdungsscheibe zur Erdung des durch das Messrohr fließenden Mediums angeordnet sind, die über das Messrohr an Masse gelegt ist.

Das Einsatzgebiet eines solchen magnetisch-induktiven Durchflussmessers erstreckt sich auf die Ermittlung von Volumen- oder Masseströmen eines fließfähigen Mediums, wie Flüssigkeiten, Breie, Pasten und dergleichen. Das fließfähige Medium muss dabei eine bestimmte elektrische Mindestleitfähigkeit aufweisen, damit das Messverfahren funktioniert. Durchflussmesser der hier interessierenden Art zeichnen sich durch recht genaue Messergebnisse aus, wobei im Rohrleitungssystem durch die Messung kein Druckverlust verursacht wird. Außerdem haben magnetisch-induktive Durchflussmesser keine beweglichen oder in das Messrohr hineinragenden Bauteile, welche dadurch besonders verschleißbehaftet wären. Die hier interessierenden Durchflussmesser werden vornehmlich in der chemischen Industrie, der Pharmazie sowie der Kosmetikindustrie und auch in der kommunalen Wasser- und Abwasserwirtschaft sowie der Nahrungsmittelindustrie eingesetzt.

Die Grundlage des Messverfahrens bildet das Faraday'sche Induktionsgesetz. Dieses Naturgesetz besagt, dass in einem sich in einem Magnetfeld bewegten Leiter eine Spannung induziert wird. Bei der messtechnischen Ausnutzung dieses Naturgesetzes durchfließt das elektrisch leitfähige Medium ein Messrohr, in dem senkrecht zur Fließrichtung ein Magnetfeld erzeugt wird. Die im Medium hierdurch induzierte Spannung wird von einer Elektrodenanordnung abgegriffen. Als Elektrodenanordnung werden meist zwei gegenüberliegend im Messrohr eingesetzte Messelektroden verwendet. Da die so gewonnene Messspannung proportional zur mittleren Fließgeschwindigkeit des strömenden Mediums ist, kann hieraus der Volumenstrom des Mediums bestimmt werden. Unter Beachtung der Dichte des strömenden Mediums lässt sich auch dessen Massestrom ermitteln.

Es ist allgemein bekannt, dass das Messrohr eines magnetisch-induktiven Durchflussmessers vollständig aus Kunststoff gefertigt werden kann. Da die verwendeten Kunststoffe elektrische Isolatoren sind, brauchen für die Anordnung der Messelektroden in der Wandung des Messrohres und dergleichen keine separaten elektrischen Isolationsmaßnahmen getroffen werden. Allerdings sind Messrohre aus Kunststoff in der Regel nur begrenzt druckfest.

Aus der DE 102 60 561 A1 geht ein Durchflussmesser hervor, welcher ein Messrohr aus Metall aufweist, so dass die vorstehend aufgezeigten Probleme bei dieser Konstruktion nicht existieren. Da ein metallisches Messrohr jedoch elektrisch leitend ist, sind lokale Isolierungsmaßnahmen erforderlich. So sind beispielsweise die Messelektroden gegenüber dem Messrohr über eine Isolationsschicht eingesetzt. Vor allem ist die Innenoberfläche des Messrohres mit einem elektrisch nicht leitenden Material ausgekleidet oder beschichtet. Hierfür eignet sich beispielsweise Polytetrafluorethylen (PTFE). Die elektrisch isolierende Auskleidung des metallischen Messrohres ist erforderlich, damit das Messprinzip, welches auf einer Induktion von Spannung in das fließende Medium beruht, funktioniert. Die elektrisch isolierende Innenschicht eines metallischen Messrohres kann auf verschiedene Weise gefertigt werden. Zum Einen ist es bekannt, ein Kunststoffrohr - sogenannter Liner - in das metallisches Messrohr einzuziehen und dort gegenüber dem Messrohr zu fixieren. Zum Anderen kann ein elektrisch isolierender Kunststoff auf die Innenoberfläche des metallischen Messrohrs aufgespritzt werden. Nach dem Aushärten ergibt sich die elektrisch isolierende Innenschicht.

Zum Funktionieren des hier verwendeten Messprinzips ist es daneben auch erforderlich, das Medium zu erden, welches das Messrohr durchfließt. Hierfür sind zusätzliche Erdungsmittel zur Erdpotentialanwendung gebräuchlich, welche über das sowieso geerdete metallische Messrohr an Masse gelegt werden und das Erdpotential an das durchfließende Medium übertragen. Zu diesem Zwecke können zusätzliche Erdungselektroden verwendet werden, welche genauso wie die Messelektroden in die Wandung des metallischen Messrohres eingesetzt werden. Dies ist jedoch fertigungstechnisch recht aufwendig. Daher wird meist zum Zwecke der Erdpotentialanwendung des durchfließenden Mediums eine Erdungsscheibe verwendet. Die Erdungsscheibe ist ringförmig und wird vom Medium durchflossen. Die Anordnung der Erdungsscheibe erfolgt auf der eingangsseitigen Flanschseite eines Messrohres, benachbart zu einem den Flansch des Messrohres gegenüber der Erdungsscheibe abdichtenden Dichtrings. Die so platzierte Erdungsscheibe ist über ein Massekabel mit dem geerdeten Metallrohr verbunden. Die Verbindung erfolgt über eine Löt- und/oder Schraubverbindung. Hieraus resultiert eine Abreißgefahr des freiliegenden Massekabels. Darüber hinaus ist die Montage die elektrische Anbindung der herkömmlichen Erdungsscheibe recht aufwendig.

Es ist daher die Aufgabe der vorliegenden Erfindung, einen magnetisch-induktiven Durchflussmesser zu schaffen, der auf fertigungstechnisch einfache Weise eine Erdpotentialanbindung des durchfließenden Mediums mit wenig Einzelbauteilen ermöglicht.

Die Aufgabe wird ausgehend von einem magnetisch-induktiven Durchflussmesser gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Erdungsscheibe aus einem elektrisch leitfähigen Kunststoff besteht, welche direkt an die Stirnseite des Messrohres dichtend zur Anlage kommt, um durch den direkten Kontakt an Masse zu kommen.

Der Vorteil der erfindungsgemäßen Lösung besteht insbesondere darin, dass zusätzliche Maßnahmen zur elektrischen Erdpotentialanbindung der Erdungsscheibe nicht mehr erforderlich sind. Die Erdungsscheibe führt eine Doppelfunktion aus, in dem diese sowohl als Dichtung im Flanschbereich des Messrohres gegenüber der hier angeschlossenen Rohrleitung fungiert und auch durch den hierdurch erzeugten direkten Kontakt und aufgrund ihrer elektrischen Leitfähigkeit die Funktion der Erdpotentialanbindung für das hindurchfließende Medium wahrnimmt. Es entfällt somit das ansonsten übliche elektrische Kontaktieren der Erdungsscheibe mit dem Erdpotential über eine Massekabel, da die elektrische Verbindung zum Messrohr durch den direkten Kontakt sichergestellt ist. In Ergebnis dessen wird mit der erfindungsgemäßen Lösung eine Funktionsintegration erzielt.

Die erfindungsgemäße Erdungsscheibe kann auf verschiedene Weise ausgebildet sein. Zum Einen ist es möglich, dass die Erdungsscheibe einstückig an die elektrisch isolierende Innenschicht angeformt ist. Da auch die Erdungsscheibe aus Kunststoff besteht, ist es möglich, diese nach oder im Zuge des Einspritzens von Beschichtungsmaterial zur Innenauskleidung des Messrohres mit anzuspritzen. Da die Erdungsscheibe wegen ihrer elektrisch leitfähigen Eigenschaften im Vergleich zu der Innenbeschichtung aus einem anderen Werkstoff bestehen muss, ist hierfür ein ZweiKomponenten-Spritzverfahren anzuwenden.

Daneben ist es auch denkbar, die Erdungsscheibe als ein separates Bauteil auszubilden, das sich in der Einbauposition dichtend an die Stirnseite der elektrisch isolierenden Innenschicht anlegt. Hierdurch wird vermieden, dass das fließfähige Medium, welches das Messrohr passiert, in den Spaltbereich zwischen Erdungsscheibe und Innenauskleidung eindringt, um hier Korrosionen zu verursachen.

Gemäß einer die vorstehende Ausführungsform verbessernden Maßnahme wird vorgeschlagen, dass die separate Erdungsscheibe im Kontaktbereich zur Innenschicht mit einem Absatz versehen ist, der mit einem korrespondierenden Absatz oder einer Ausnehmung seitens der Innenschicht zusammenwirkt, um eine formschlüssige Verbindung zwischen beiden Bauteilen sicherzustellen. Diese formschlüssige Verbindung erleichtert die koaxiale Zentrierung bei der Montage der Erdungsscheibe am zugeordneten Flansch des Messrohres und hierdurch wird die optimale relative Lage auf einfache Weise sichergestellt.

Alternativ hierzu ist es jedoch auch möglich, die Erdungsscheibe an der Stirnseite der elektrisch isolierenden Innenschicht oder im Kontaktbereich zum Messrohr durch Kleben oder Schweißen unlösbar zu befestigen. Da diese Maßnahme gleich bei der Herstellung des magnetisch-induktiven Durchflussmessers erfolgen kann, wird eine Montage der Erdungsscheibe am Einsatzort gänzlich vermieden. Hierdurch wird sichergestellt, dass die Erdungsscheibe beim Einbau des erfindungsgemäßen magnetisch-induktiven Durchflussmessers weder falsch montiert noch gänzlich vergessen werden kann.

Der Kunststoff der Erdungsscheibe soll vorzugsweise eine Härte im Bereich von Gummi aufweisen, um seine Nebenfunktion als Dichtung optimal sicherzustellen. Der Härtegrad des verwendeten Gummis, Elastomers oder Kunststoffs sollte vorzugsweise 10-90 SHORE A betragen.

Die erfindungsgemäße Lösung eignet sich für magentisch-induktive Durchflussmesser, welche sowohl mit einer aufgespritzten elektrischen isolierenden Innenschicht als auch mit einem Einschubrohr aus Kunststoff ausgeführt sind. Voraussetzung ist lediglich, dass das Messrohr selbst aus Metall, also einem elektrisch leitfähigen Material besteht, und selbst auch geerdet ist. Vorzugsweise sollte das elektrisch leitfähige, metallische Messrohr aus einer Stahllegierung bestehen, welche materialbedingt besonders druckfest ist.

Weitere die Erfindung verbessernde Maßnahme werden nachstehend gemeinsam mit der Beschreibung eines bevorzugten Ausführungsbeispiels der Erfindung anhand der Figuren näher dargestellt. Es zeigt:
- Fig.1: einen Teilschnitt eines Messrohres eines magnetisch-induktiven Durchflussmessers im Flanschbereich gemäß des Standes der Technik, und
- Fig.2: einen Teilschnitt eines Messrohres eines magnetisch-induktiven Durchflussmessers im Flanschbereich gemäß der erfindungsgemäßen Lösung.

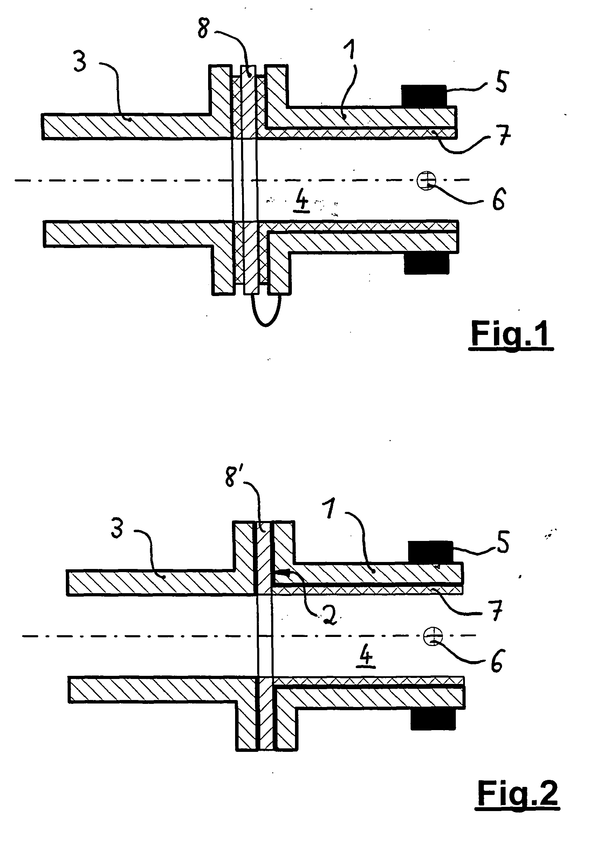

Gemäß des Standes der Technik nach Fig.1 besitzt das ausschnittsweise dargestellte Messrohr 1 aus Stahl an seiner Stirnseite 2 einen Anschlussflansch. Über den Anschlussflansch ist das Messrohr in eine - hier ebenfalls nur als Ausschnitt dargestellte - Rohrleitung 3 eingefügt, und zwar über eine Schraubverbindung. Über die Rohrleitung 3 ist das Messrohr 1 von einem Medium 4 durchflossen, welches eine elektrische Mindestleitfähigkeit aufweist, damit das patentgegenständliche magnetisch-induktive Durchflussmessprinzip funktioniert. Das Innere des Messrohres 1 ist von einem Magnetfeld durchsetzt, welches mittels einer außen am Messrohr 1 angebrachten Magnetanordnung 5 erzeugt wird. Im Bereich des Magnetfelds sind zwei diametral ebenfalls am Messrohr 1 angeordnete Messelektroden 6 - hier wegen der Schnittdarstellung nur eine gezeigt - zur Erfassung der induktiv erzeugten Messspannung vorgesehen. Das metallische Messrohr ist mit einer elektrisch isolierenden Innenschicht 7 aus Kunststoff ausgespritzt. Im Bereich der Stirnseite 2 erstreckt sich die Innenschicht 7 nach radial außen, um gleichzeitig auch als Dichtung zwischen dem Messrohr 1 und einer hieran anliegend montierten Erdungsscheibe 8 zu dienen. Die Erdungsscheibe 8 dient der Erdpotentialanbindung des durch das Messrohr 1 fließenden Mediums. Auf der der Rohrleitung 3 zugewandten Seite ist eine weitere Dichtung 9 erforderlich. Die Erdungsscheibe 8 besteht aus Metall und ist insoweit elektrisch leitfähig. Außenradial der Erdungsscheibe 8 ist ein Massekabel 10 befestigt, das zum anderen Ende hin mit dem metallischen Messrohr 1 kontaktiert ist. Mittels Massekabel 10 ist die metallische Erdungsscheibe 8 über das Messrohr 1 an Masse gelegt.

Gemäß Fig.2 unterscheidet sich die erfindungsgemäße Lösung von dem vorstehend beschriebenen Stand der Technik dadurch, dass die Erdungsscheibe 8' aus einem elektrisch leitfähigen Kunststoff besteht. Hierfür kann ein Elastomerwerkstoff mit eingearbeiteten Kohlenstofffäden dienen. Die erfindungsgemäße Erdungsscheibe 8' kommt direkt an der Stirnseite 2, d.h. im Flanschbereich des Messrohres 1, zur Anlage, um durch den direkten Kontakt an Masse zu kommen. Denn das metallische Messrohr 1 ist an Masse gelegt. Bei diesem Ausführungsbeispiel ist die Erdungsscheibe 8' als ein separates Bauteil ausgebildet, das sich in der Einbauposition dichtend an die Stirnseite der elektrisch isolierenden Innenschicht 7 anlegt. An dieser Kontaktstelle ist die Erdungsscheibe 8' durch Kleben an der Innenschicht 7 unlösbar befestigt.

Die Erfindung ist nicht beschränkt auf das vorstehend beschriebene bevorzugte Ausführungsbeispiel. Es sind vielmehr auch Abwandlungen denkbar, welche vom Schutzumfang der nachfolgenden Ansprüche abgedeckt sind. So ist es beispielsweise auch möglich, die Erdungsscheibe einstückig an die elektrisch isolierende Innenschicht anzuformen. Wird eine separate Erdungsscheibe verwendet, so kann diese über eine formschlüssige Verbindung in Form eines Zentrieransatzes gegenüber dem Messrohr lagebestimmt werden, was die Montag erleichtert.

### Bezugszeichenliste

- 1: Messrohr
- 2: Stirnseite
- 3: Rohrleitung
- 4: Medium
- 5: Magnetanordnung
- 6: Messelektroden
- 7: Innenschicht
- 8: Erdungsscheibe

## Patentansprüche

1. Magnetisch-induktiver Durchflussmesser mit einem Messrohr (1) aus Metall, das von einem eine elektrische Mindestleitfähigkeit aufweisenden Medium (4) durchflossen ist, welches von einem mittels Magnetanordnung (5) erzeugten Magnetfeld durchsetzt ist, in dessen Bereich mindestens zwei diametral am Messrohr (1) angeordnete Messelektroden (6) zur Erfassung der induktiv erzeugten Messspannung vorgesehen sind, wobei das metallische Messrohr (1) mit einer elektrisch isolierenden Innenschicht (7) versehen ist und stirnseitig eine elektrisch leitfähige Erdungsscheibe (8) zur Erdung des durch das Messrohr (1) fließenden Mediums angeordnet sind, die über das Messrohr (1) an Masse gelegt ist,
**dadurch gekennzeichnet, dass** die Erdungsscheibe (8') aus einem elektrisch leitfähigen Kunststoff besteht, welche dichtend an die Stirnseite (2) des Messrohres (1) zur Anlage kommt, um durch den direkten Kontakt an Masse zu kommen.

2. Magnetisch-induktiver Durchflussmesser nach Anspruch 1,
**dadurch gekennzeichnet, dass** die Erdungsscheibe (8') einstückig an die elektrisch isolierende Innenschicht (7) angeformt ist.

3. Magnetisch-induktiver Durchflussmesser nach Anspruch 1,
**dadurch gekennzeichnet, dass** die Erdungsscheibe (8') als ein separates Bauteil ausgebildet ist, das sich in der Einbauposition dichtend an die Stirnseite der elektrisch isolierenden Innenschicht (7) anlegt.

4. Magnetisch-induktiver Durchflussmesser nach Anspruch 1,
**dadurch gekennzeichnet, dass** die separate Erdungsscheibe (8') im Kontaktbereich zur Innenschicht (7) mit einem Absatz versehen ist, der mit einem korrespondierenden Absatz seitens der Innenschicht (7) zusammenwirkt, um zu Zentrierzwecken eine formschlüssige Verbindung zwischen beiden Bauteilen sicherzustellen.

5. Magnetisch-induktiver Durchflussmesser nach Anspruch 3 oder 4,
**dadurch gekennzeichnet, dass** die Erdungsscheibe (8') an der Stirnseite der elektrisch isolierenden Innenschicht (7) durch Kleben oder Schweißen unlösbar befestigt ist.

6. Magnetisch-induktiver Durchflussmesser nach einem der vorstehenden Ansprüche,
**dadurch gekennzeichnet, dass** der Kunststoff der Erdungsscheibe (8') eine Härte im Bereich von Gummi aufweist, um optimale elastische Dichteigenschaften sicherzustellen.

7. Magnetisch-induktiver Durchflussmesser nach Anspruch 1,
**dadurch gekennzeichnet, dass** die elektrisch isolierende Innenschicht (7) als eine Beschichtung aus einem auf die Innenoberfläche des Messrohres (1) aufgespritzten Kunststoff ausgeführt ist.

8. Magnetisch-induktiver Durchflussmesser nach Anspruch 1,
**dadurch gekennzeichnet, dass** die elektrisch isolierende Innenschicht (7) als ein Einschubrohr aus Kunststoff ausgeführt ist.

9. Magnetisch-induktiver Durchflussmesser nach Anspruch 1,
**dadurch gekennzeichnet, dass** die Stirnseite (2) des Messrohres (1), an welche die Erdungsscheibe (8') zur Anlage kommt, in Form eines Anschlussflansches ausgebildet ist, der an einen korrespondierenden Anschlussflansch seitens der Rohrleitung (3) über eine Schraubverbindung befestigt ist.

10. Magnetisch-induktiver Durchflussmesser nach Anspruch 1,
**dadurch gekennzeichnet, dass** das elektrisch leitfähige, metallische Messrohr (1) aus einer Stahllegierung hergestellt ist.
